Europäisches Patentamt

European Patent Office

Office européen des brevets

(11) Veröffentlichungsnummer: **0 295 323**
**A1**

## (12) EUROPÄISCHE PATENTANMELDUNG

(21) Anmeldenummer: **87108826.6**

(22) Anmeldetag: **19.06.87**

(51) Int. Cl.⁴: **B01D 3/14 , B01J 8/18**

(43) Veröffentlichungstag der Anmeldung:
**21.12.88 Patentblatt 88/51**

(84) Benannte Vertragsstaaten:
**BE CH DE ES FR GB GR IT LI LU NL SE**

(71) Anmelder: **WAAGNER-BIRO AKTIENGESELLSCHAFT**
**Stadlauer-Strasse 54 Postfach 11**
**A-1221 Wien(AT)**

(72) Erfinder: **Hillinger, Bruno, Dr. Dipl.-Ing.**
**Dreisteingasse 20**
**A-2371 Hinterbrühl(AT)**
Erfinder: **Beckmann, Georg, Dr. Dipl.-Ing.**
**Jacquingasse 55/10**
**A-1030 Wien(AT)**

(74) Vertreter: **Wallner, Gerhard, Dipl.-Ing. et al**
**Waagner-Biro Aktiengesellschaft**
**Patentreferat Postfach 11**
**A-1221 Wien(AT)**

(54) **Verfahren und Einrichtung zur thermischen Behandlung.**

(57) Die vorliegende Erfindung offenbart eine Möglichkeit zur Verarbeitung der biologisch schwer abbaubaren Brüdenkondensate, wobei die Brüden in einer Rektifizierkolonne 4 behandelt werden, so daß aus dem Abgas unterschiedliche Fraktionen abgeschieden werden können, die einer unterschiedlichen Entsorgung bzw. Verwertung zugeführt werden. Die Rektifizierkolonne 4 ist dabei an der Rezirkulationsleitung 2 angeschlossen. Die unterschiedlichen Fraktionen werden über die Leitungen 9, 9', 9" bzw. 10 und 10' abgeführt.

Fig. 1

## Verfahren und Einrichtung zur thermischen Behandlung

Die Erfindung betrifft ein Verfahren zur thermischen Behandlung wie z.B. Trocknung, Verschwelung und/oder Vergasung körniger, bzw. pastöser Substanzen und/oder Schlämme in einem beheizten Wirbelbett, dessen Abgas über einen Abscheider und einem Gebläse von der Oberseite des Wirbelbettes abgesaugt und nach Abscheidung von Stäuben sowie teilweiser Kondensation und Abscheidung der dampfförmigen Verunreinigungen zumindest teilweise als Fluidisierungsgas zum Ausströmboden des wirkbelbettes rückgeführt wird, und eine Einrichtung zur Durchführung des Verfahrens.

Es ist bekannt, GP-PS 2 053 715 und 1 575 837, körnige bzw. pastöse Substanzen und/oder Schlämme in einem beheizten Wirbelbett thermisch zu behandeln, d.h. zu trocknen oder Lösungsmittel auszutrieben, wobei das vom Wirkbelbettapparat abströmende Gas rezirkuliert wird. Bei der Rückführung des Gases und Kondensation des Überschußgases, in welchem eine Reihe wasserfremder Stoffe enthalten ist, die sich biologisch - schwer abbauen lassen, entsteht für das Grundwasser ein Umweltproblem.

Die Erfindung hat es sich zur Aufgabe gestellt, dem anstehenden Umweltproblem zu begegnen, die Deponien zu entlasten und aus dem abströmenden Gas brauchbare oder für unterschiedliche Ent sorgung geeignete Substanzen zu entfernen, die einzeln und rein wertvoll, aber in ihrer Mischung in Wasser gelöst wertlos sind. Gegenbenenfalls läßt sich durch den Verkauf der abgeschiedenen Substanzen als Chemierohstoffe der Betrieb der Anlage finanzieren und so indirekt aus dem Umweltschutz ein wirschaftlicher Erfolg ableiten, wobei dann unter Umständen das aus dem Kondensat resultierende Abwasser so rein ist, daß es direkt dem Vorfluter übergeben werden kann, wodurch weitere Reinigungskosten entfallen. Dadurch bringt die Ersetzung des Kondensators durch eine Rektifizierkolonne den Erfolg.

Das vorliegende erfindungsgemäße Verfahren ist dadurch gekennzeichnet, daß zumindest ein Teilstrom des Abgases über eine Rektifizierkolonne geführt wird, in der aus dem Wirkelbett mitgenommene gasförmige Verunreinigungen und Dämpfe durch Kondensation in Fraktionen getrennt werden, die unterschiedlichen Entsorgungen und Verwendungen zugeführt werden. In den Unteransprüchen 2 bis 4 sind zweckmäßige Ausgestaltungen der Erfindung angegeben.

Die erfindungsgemäße Einrichtung zur Durchführung des Verfahrens ist dadurch gekennzeichnet, daß die Rezirkulationsleitung für das Fluidisierungsgas über eine Abzugleitung oder direkt über eine Rektifizierkolonne geführt ist. Ausgestaltungen der Erfindung sind in den Unteransprüchen 6 und 7 angeführt.

Die Erfindung ist in den Fig. 1 bis 3 beispielsweise und schematisch dargestellt.

Es zeigen Fig. 1 einen Fließbetttrockner, dessen Fluidisierungsgas im geschlossenen Kreislauf geführt wird, von dem das Überschußgas in Teilfraktionen zerlegt wird, Fig. 2 einen Fließbetttrockner mit teilweiser Verschwelung bzw. Vergasung des zu trocknenden Gutes, wobei das gesamte im Kreislauf geführte Gas einer Abscheidung zugeführt wird, und Fig. 3 einen Fließbetttrockner mit angeschlossener zweiter Stufe, bei dem das abzuführende Fluidisierungsgas in zwei Temperaturstufen anfällt, welche getrennt der Reinigungseinrichtung zugeführt und entsprechend der Zusammensetzung gereinigt werden.

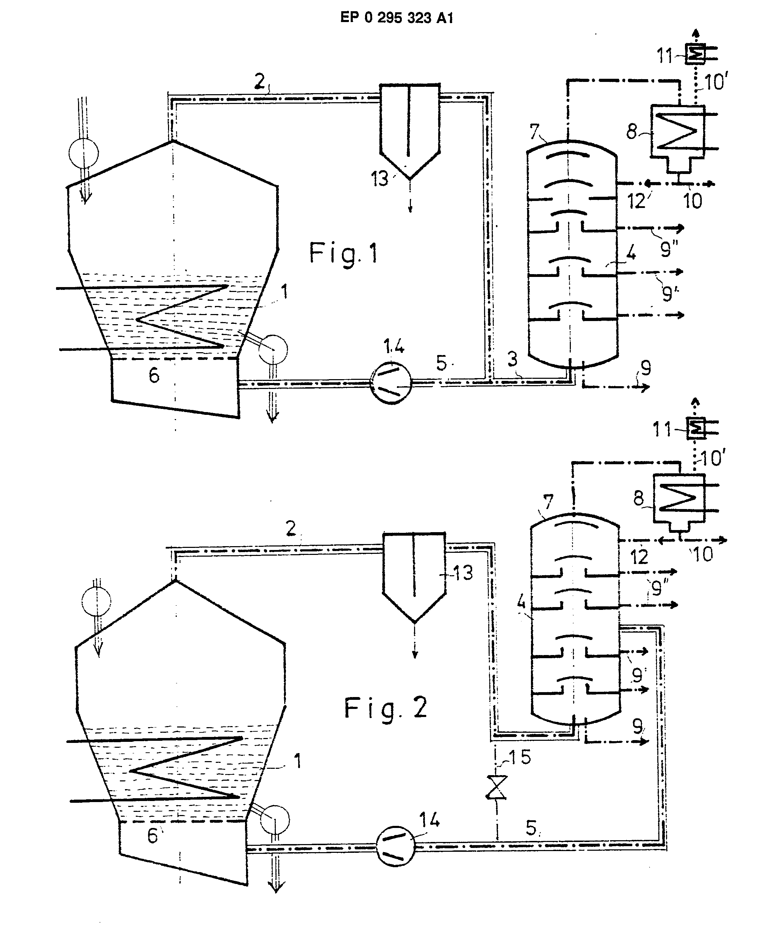

In Fig. 1 ist ein Wirbelbett 1 dargestellt, bei dem das vom Wirbelbett abströmende Abgas über eine Rezirkulationsleitung 2 mit dem Anströmboden 6 verbunden ist, wobei das Überschußgas, das der Gasmenge entspricht, die im Wirbelbetttrockner aus dem Gut ausgetrieben wird, über eine Abzweigleitung 3 einer Rektifizierkolonne 4 zugeführt wird. In der Rektifizierkolonne 4 werden die bei unterschiedlicher Temperatur anfallenden Kondensate getrennt über die Leitungen 9, 9′, 9″ abgeführt. Das am Kopf 7 der Rektifizierkolonne 4 anfallende Gas wird einem als Dephlegmator ausgebildeten Kondensator 8 zugeführt, in welchem das kondensierbare vom nicht kondensierbaren getrennt und über unterschiedliche Leitungen 10, 10′ und eventuell nach einer weiteren Unterkühlung in einem Kühler 11 abgeführt wird. Ein regelbarer Teil des im Kondensator 8 anfallenden Kondensates wird über die Leitung 12 der Rektifizierkolonne zugeführt. Das rückgeführte Kondensat dient u.a. als direktes Kühlmittel für die Rektifizierkolonne und ermöglicht eine starke Konzentration der abzuscheidenden destillate. In der Rezirkulationsleitung könnte ferner noch ein Trockenabscheider 13 und ein Unwälzgebläse 14 eingebaut sein.

In Fig. 2 ist im unterschied zu Fig. 1 die Umwälzleitung 2 direkt an die Rektifizierkolonne 4 angeschlossen, was den Vorteil hat, daß das gesamte Umwälzgas gleichmäßig von Fremdstoffen gereinigt wird, so daß Kondensationen im Bereich des Fließbettes und damit Verkrustungen bzw. Verklebungen vermeidbar erscheinen. Diese Schaltung ist besonders interessant, wenn während der Trocknung im Wirbelbett auch eine Verschwelung oder Vergasung des zu behandelnden Gutes durchgeführt wird. Gegenbenenfalls kann auch eine Bypassleitung 15 vorgesehen werden, um die Rektifizierkolonne 4 zu entlasten oder um einen hohen Anteil an Kondensierbarem im Abgas zu erreichen, und damit den Abscheidegrad der Rektifizierkolonne 4 zu verbessern. Gleichzeitig wird damit auch der Wärmeverlust reduziert. Durch die Maßnahmen des Schaltbildes nach Fig. 2 werden aus dem in der Rezirkulationsleitung 2 strömenden Abgas, welches zumindest teilsweise als Fluidisierungsgas verwendet wird, die Bestandteile mit höherem Siedepunkt ausgeschieden, und das in den Anströmboden 6 des Wirbelbettes 1 rezirkulierte Fluidisierungsgas enthält somit nur die niedersiedenden Bestandteile, was z.B. von Bedeutung ist, wenn die Gefahr der Kondensation und des Verklebens im Umwälzgebläse 14 und im Anströmboden 6 des Wirbelbettes 1 aufträte. Im Extremfall kann das Umwälzgebläse die niederste Siedefraktion am Kopf der Rektifizierkolonne 4 entnehmen. Bei dieser Schaltungsvariante ist es auch möglich, auf den Trockenabscheider 13 zwischen dem Wirkbebett 1, welches als Dampfwirbelschicht/Trockner ausgebildet ist, und der Rektifizierkolonne 4 zu verzichten, da durch das entgegenfließende schwersiedende Kondensat ein Reinigungseffekt erzielt wird. In diesem Fall ist das durch die Leitung 9 abströmende Kondensat durch Feststoffe stark verschmutzt.

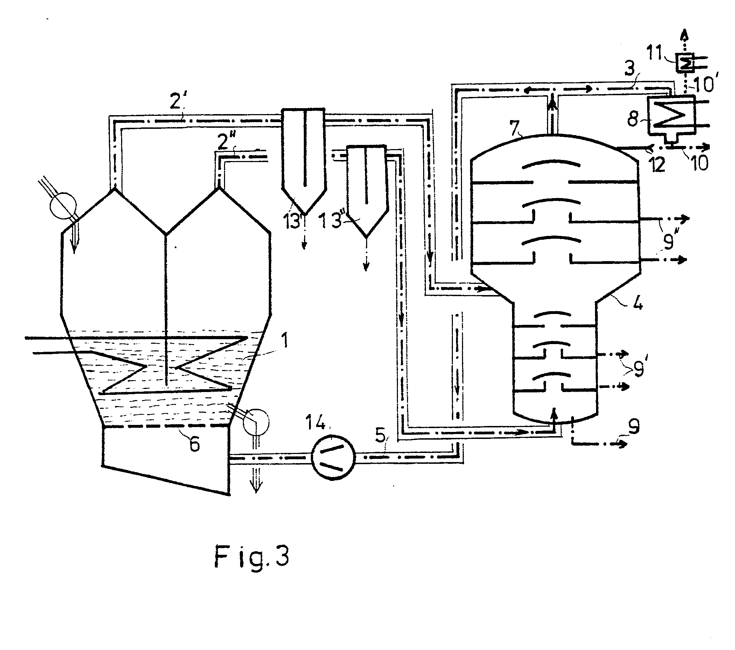

Fig. 3 offenbart eine weitere Ausgestaltung des Erfindungsgedankens bei einem zweistufigen Wirbelbetttrockner, bei dem in der ersten Stufe eine Vortrocknung bzw. die Trocknung und in der zweiten Stufe die Nachtrocknung bzw. Vergasung oder Verschwelung des Gutes erreicht wird. Die aus beiden Stufen abziehenden Brüden werden getrennt gesammelt und der Rektifizierkolonne 4 an getrennten Stellen zugeführt. Die Zuführungsleitungen zur Rektifizierkolonne sind mit 2', 2" bezeichnet. Beide Teilströme werden in der Rektifizierkolonne vereint, wobei nach Ausscheidung der Verunreinigungen bzw. des Überschußgases das rückgeführte Fluidisierungsmedium über die Leitung 5 dem Umwälzgebläse 14 und letzten Endes dem Anströmboden 6 des Wirbelbettes zugeführt wird.

In allen Fällen wird ein relativ reines Kondensat erzeugt, welches weiter verwendbar ist und auch ohne wesentliche Umweltbelastung dem Vorfluter übergeben werden kann. Die anderen Kondensate können teilweise verbrannt bzw. als Rohstoffe an die Chemische Industrie verkauft werden. Durch den Verkauf der relativ reinen Abfallstoffe kann somit aus dem Umweltschutz ein gewisser Gewinn geschöpft werden, wodurch zumindest die Betriebskosten der Anlage gedeckt sind.

In der Schaltungsvariante nach Fig. 3 wird das Feuchtgut, also die thermisch zu behandelnde Substanz, in Serie durch zwei Wirbelbette mit unterschiedlichem Temperaturniveau geführt. Der zweite Wirbelbetttrockner mit dem hohen Temperaturniveau gibt seine Brüden bzw. Schwelgase und Schweldämpfer über die Leitung 2" an die Rektifizierkolonne 4 ab, während der erste Wirbelbetttrockner mit dem niederen Temperaturniveau seine leichter siedenden Brüden über die Rezirkulationsleitung 2' in die Mitte der Rektifizierkolonne 4 aufgibt. Wird als Fluidisierungsgas der nieder siedende Dampf z.B. am Kopf 7 der Rektifizierkolonne 4 entnommen und rezirkuliert, so ergibt sich im zweiten Wirbelbetttrockner entsprechend der Partialdruckabsenkung bei der hoch siedenden Feuchtigkeitskomponente eine Erleichterung des Trocknungsvorganges. Auch in diesem Fall können die Trockenabscheider 13' und 13" aus den bei der Beschreibung der Fig. 2 angegebenen Gründen entfallen.

Die Erfindung ist nicht nur für die Trocknung und Hygienisierung von Klärschlamm, sondern auch bei der Trocknung und/oder Entschwefelung grubenfeuchter Braunkohle, Steinkohle, anwendbar, wobei durch die Inverkehrbringung der so gewonnenen Schwefelverbindungen der bergmännisch gewonnene Schwefel im Berg bleibt und letzten Endes die Gesamtmenge an Schwefel, die in die Atmosphäre gelangt, reduziert wird.

## Ansprüche

1) Verfahren zur thermischen Behandlung, wie z.B. Trocknung, Verschwelung und/oder Vergasung, körniger, bzw. pastöser Substanzen und/oder Schlämme in einem beheizten Wirbelbett, dessen Abgas über einen Abscheider und einem Gebläse von der Oberseite des Wirbelbettes abgesaugt und nach Abscheidung von Stäuben sowie teilweiser Kondensation und Abscheidung der dampfförmigen Verunreinigungen zumindest teilweise als Fluidisierungsgas zum Anströmboden des Wirbelbettes rückgeführt wird, dadurch gekennzeichnet, daß zumindest ein Teilstrom des vom Wirbelbett abströmenden Abgases über eine Rektifizierkolonne geführt wird, in der die aus dem Wirbelbett mitgenommenen gasförmigen Verunreinigungen und Dämpfe durch Kondensation in Fraktionen getrennt werden, die unterschiedlichen Entsorgungen und Verwendungen zugeführt werden.

2) Verfahren nach Anspruch 1, dadurch gekennzeichnet, daß das gesamte im Kreislauf geführte Fluidisierungsgas durch die Rektifizierkolonne geführt und in dieser von den aus dem Wirbelbett entnommenen Dämpfen durch Kondensation befreit wird.

3) Verfahren nach Anspruch 2, dadurch gekennzeichnet, daß das Wirbelbett mehrstufig ausgebildet ist und das von den einzelnen Stufen abgeführte mit Dämpfen verunreinigte Fluidisierungsgas bei den entsprechenden Temperaturstufen der Rektifizierkolonne in diese übergeführt werden.

4) Verfahren nach Anspruch 2 oder 3, dadurch gekennzeichnet, daß zumindest ein Teilstrom des aus der Rektifizierkolonne austretenden Gasgemisches einem Kondensator zugeführt wird, aus dem ein Teilstrom der kondensierten Flüssigkeit in die Rektifizierkolonne rückgeführt wird.

5) Einrichtung zur Durchführung des Verfahrens nach mindestens einem der Ansprüche 1 bis 4, dadurch gekennzeichnet, daß die Rezirkulationsleitung 2 für das Fluidisierungsgas über eine Abzugleitung 3 oder direkt über eine Rektifizierkolonne 4 geführt ist.

6) Einrichtung nach Anspruch 5, dadurch gekennzeichnet, daß die vom Wirbelbett 1 abführende Rezirkulationsleitung 2 mindestens zwei Stränge 2' und 2" aufweist, die in die Rektifizierkolonne 4 münden, von der eine Leitung 5 zum Anströmboden 6 des Wirbelbettes 1 geführt ist.

7) Einrichtung nach Anspruch 5 oder 6, dadurch gekennzeichnet, daß am Kopf 7 der Rektifizierkolonne 4 ein Kondensator 8 angeschlossen ist, von dem zumindest ein Teil des Kondensates in die Rektifizierkolonne 4 rückgeführt ist.

Fig. 1

Fig. 2

EP 0 295 323 A1

Fig.3

**Europäisches Patentamt**

## EUROPÄISCHER RECHERCHENBERICHT

Nummer der Anmeldung

EP 87 10 8826

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | PATENT ABSTRACTS OF JAPAN, Band 7, Nr. 114 (C-166)[1259], 18. Mai 1983; & JP - A - 58 032 690 (JIYUUSHITSUYU TAISAKU) 25.02.1983 --- | 1-2 | B 01 D 3/14 B 01 J 8/18 |
| A | DE-A-2 707 065 (H.-P. KÜLLING) * Anspruch 1; Figur * & GB - A - 1 575 837 (Kat. D, A) --- | | |
| A | DE-A-2 943 528 (ESCHER-WYSS) * Anspruch 1 * & GB - A - 2 053 715 (Kat. D,A) ----- | | |
| | | | **RECHERCHIERTE SACHGEBIETE (Int. Cl.3)** B 01 D 3/00 B 01 J 8/00 |

Der vorliegende Recherchenbericht wurde für alle Patentansprüche erstellt

| Recherchenort | Abschlußdatum der Recherche | Prüfer |
|---|---|---|
| BERLIN | 26-01-1988 | KESTEN W.G. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

.....................................................................
& : Mitglied der gleichen Patentfamilie, übereinstimmendes Dokument